## Europäisches Patentamt
## European Patent Office
## Office européen des brevets

(19)

(11) Numéro de publication: **0 122 828**
**B1**

(12) **FASCICULE DE BREVET EUROPEEN**

(45) Date de publication du fascicule du brevet:
**17.02.88**

(51) Int. Cl.⁴: **F 16 F 1/06**, D 02 G 3/22

(21) Numéro de dépôt: **84400493.7**

(22) Date de dépôt: **12.03.84**

(54) Produit hélicoidal du type ressort en matière plastique et son procédé et dispositif d'obtention.

(30) Priorité: **10.03.83 FR 8303921**
**26.12.83 FR 8320763**

(43) Date de publication de la demande:
**24.10.84 Bulletin 84/43**

(45) Mention de la délivrance du brevet:
**17.02.88 Bulletin 88/7**

(84) Etats contractants désignés:
**BE DE FR GB IT NL SE**

(56) Documents cités:
**FR - A - 1 085 331**
**FR - A - 1 303 358**
**GB - A - 1 083 481**
**GB - A - 2 056 615**
**US - A - 2 392 842**
**US - A - 2 432 935**
**US - A - 4 198 459**
**US - A - 4 201 813**

(73) Titulaire: **Simonin & Cie S.A., Chemin des Romains,**
**F-25720 Beure, Doubs (FR)**

(72) Inventeur: **Bouteille, Daniel, 2 allée des Châtaigniers,**
**F-92410 Ville-d'Avray (FR)**
Inventeur: **Besnainou, Charles, 11 rue de Mondétour**
**Montjay, F-91440 Bures-sur-Yvette (FR)**
Inventeur: **Chatain, Michel, 53 avenue du Général**
**Leclerc, F-92340 Bourg-la-Reine (FR)**
Inventeur: **Brottier, Eric, 6, rue des Sept Moulins,**
**F-51000 Chalons/Marne (FR)**

(74) Mandataire: **Robert, Jean-Pierre, CABINET**
**BOETTCHER 23, rue la Boétie, F-75008 Paris (FR)**

ACTORUM AG

## Description

La présente invention concerne un procédé et un dispositif de fabrication d'un produit hélicoïdal non métallique possédant une élasticité longitudinale et radiale du type ressort.

La plupart des ressorts hélicoïdaux sont métalliques. Leur obtention résulte d'une déformation au moyen d'un outillage approprié, d'un fil métallique. Ils constituent la fraction principale des éléments longitudinalement élastiques, au nombre desquels il faut ajouter les produits élastomériques à un ou plusieurs fils assemblés, et les produits en matière plastique également en forme de ressort.

Pour ce qui concerne les ressorts hélicoïdaux en matière plastique on connaît plusieurs techniques de fabrication. L'une d'entre elles consiste à tailler dans la masse, par usinage, un ressort. Une seconde consiste à procéder à l'enroulement sur un mandrin d'un fil de matière plastique, à lui faire subir un traitement thermique pour fixer cette déformation et à retirer le mandrin de formage. Une troisème consiste à former le ressort par moulage ou injection. Outre les caractéristiques d'élasticité souvent médiocres de ces produits, la principale limite de ces techniques réside dans la faible longueur des produits qu'elles permettent d'obtenir du fait des contraintes technologiques apportées par l'outillage. On a également pensé à transposer la technologie de fabrication des ressorts métalliques au matériau élastique en procédant à l'enroulement forcé d'un fil plastique sur un tourillon associé à des galets presseurs et entraîneurs de manière à former un ressort de grande longueur. Les ressorts ainsi obtenus, malgré les traitements thermiques qu'ils subissent au moment de et après leur fabrication, possèdent des caractéristiques élastiques médiocres.

On connaît en outre une méthode de fabrication de ressorts non métalliques consistant à conformer hélicoïdalement une armature en fibre que l'on enrobe, en forme, d'une résine thermodurcissable.

Par le document US-A-2 392 842, on connaît un procédé de fabrication d'un produit hélicoïdal à partir d'un fil de base en matériau synthétique monofilament, plastiquement déformable, selon lequel on crée une déformation du fil par une opération qui consiste à imprimer au fil, placé sous une tension déterminée, une torsion autour de son axe longitudinal entre deux points solidaires en torsion du fil et mobiles en rotation l'un par rapport à l'autre autour de son axe, jusqu'à la formation de nœuds successifs qui placent progressivement le fil dans une configuration hélicoïdale à spires jointinves.

La mise en œuvre industrielle de ce procédé nécessite la maîtrise de nombreux paramètres et notamment la localisation précise de la formation du premier nœud.

L'invention réside dans un procédé du type du document susdit dans lequel on déplace l'un des points susdits par rapport au fil au fur et à mesure de la formation desdits nœuds. Ce déplacement sera avantageusement commandé par la position du dernier nœud formé.

L'invention a également pour objet le dispositif pour mettre en œuvre le procédé susdit. Ce dispositif comporte, dans un premier mode de réalisation, un organe de mise en torsion d'un fil, un dispositif de tension de ce fil, et un organe verrouilleur de torsion déplaçable le long du fil constitué par un organe de révolution autour duquel le fil forme au moins un tour mort. Le déplacement relatif du fil et de l'organe verrouilleur sera commandé par la position du dernier nœud formé.

Une première variante du mode de réalisation susdit du dispositif, destinée à mettre en œuvre le procédé de façon continue, réside dans le fait que l'organe de mise en torsion susdit est constitué par une bobine d'enroulement du produit entraînée en rotation autour d'un axe sensiblement perpendiculaire à son axe d'enroulement. Le fil est alors issu, en amont de l'organe verrouilleur d'une extrudeuse et d'un dispositif d'étirage.

Dans une seconde variante de réalisation, toujours destinée à mettre en œuvre le procédé susdit de façon continue, l'organe verrouilleur de torsion constitue l'organe de mise en torsion susdit et est monté sur un bâti tournant autour de l'axe longitudinal du fil, ledit bâti étant porteur d'une bobine de fil de base en amont de l'organe verrouilleur tandis qu'en aval de ce dernier ledit dispositif comporte un organe d'immobilisation en torsion du produit et d'entraînement longitudinal de ce dernier en direction d'une bobine d'enroulement. Il sera avantageux de monter ladite bobine d'enroulement à rotation autour d'un axe sensiblement parallèle à l'axe longitudinal du produit. En outre, le dispositif selon ces deux variantes, comprend un détecteur de position du dernier nœud formé associé à un dispositif de commande de la position de l'organe de verrouillage de torsion par rapport à ce dernier nœud.

Un second mode de réalisation réside dans le fait que l'organe de mise en torsion du fil est constitué par une bobine de déroulement de ce dernier entraînée en rotation autour de son axe, et par un guide-fil de dévidement du fil animé d'un mouvement de rotation autour de l'axe de la bobine d'une vitesse légèrement inférieure ou légèrement supérieure à celle de rotation de la bobine selon que cette rotation est respectivement de même sens ou de sens contraire à celui du bobinage du fil sur la bobine. Dans ce cas on considère que c'est la bobine elle-même qui constitue, par effet de cabestan, l'organe de verrouillage de torsion.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels:

– la figure 1 est un schéma de principe illustrant le début de la mise en œuvre d'un mode d'exécution du procédé selon l'invention;

- la figure 2 illustre schématiquement la poursuite du procédé ainsi qu'un dispositif pour sa mise en œuvre;

- la figure 3 est une vue schématique d'une réalisation simplifiée du dispositif de la figure 2;

- la figure 4 illustre schématiquement un dispositif de mise en œuvre en continu du procédé décrit en regard des figures précédentes;

- la figure 5 est le schéma d'une variante de réalisation de la figure 4;

- la figure 6 représente un détail de réalisation des figures 4 et 5;

- la figure 7 illustre une variante de réalisation du dispositif de la figure 6;

- les figures 8, 9 illustrent les types principaux de produits selon l'invention;

- les figures 8A et 8B illustrent le comportement d'une spire du produit de la figure 5 soumis à un chauffage;

- la figure 10 illustre le produit selon les figures 8 et 9 ayant subi un lissage;

- la figure 11 est le schéma d'un dispositif de lissage à chaud permettant d'obtenir le produit de la figure 10.

- la figure 12 montre un type de gainage possible du produit selon l'invention;

- la figure 13 est un schéma illustrant l'expansion possible du produit selon l'invention;

- la figure 14 montre l'association de deux produits selon l'invention;

- la figure 15 est un schéma du dispositif permettant l'obtention du produit double brin de la figure 14;

- la figure 16 illustre une application du produit de l'invention au gainage serré d'un élément filiforme ou cylindrique;

- les figures 17A à 17K illustrent diverses possibilités de conformer ou atteler à l'extrémité d'un produit selon l'invention un organe de fixation;

- la figure 18 illustre l'association de plusieurs produits selon l'invention en bande élastique.

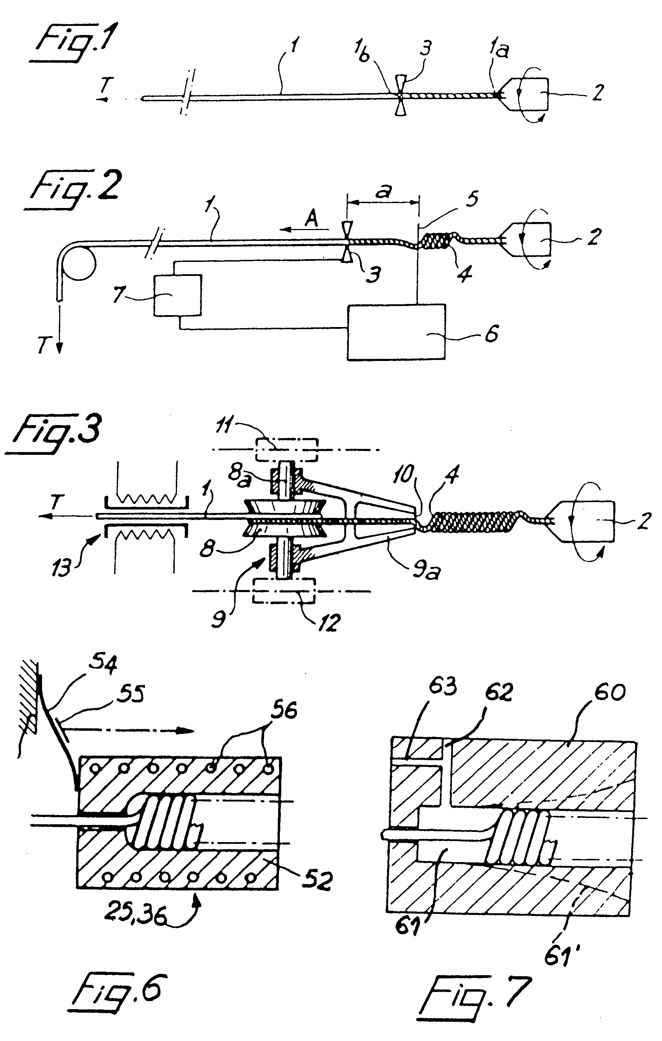

Sur la figure 1, on voit un fil 1 attelé par l'une de ses extrémités, au point 1a, à un organe 2 rotatif pour lui imprimer une torsion autour de son axe longitudinal. Le fil est soumis à la tension T d'intensité réglable juste suffisante pour empêcher le fil de prendre du mou et une valeur maximale qui sera fonction de la nature, des dimensions et des caractéristiques du fil. En un second point 1b du fil 1 on a placé un organe 3, appelé verrouilleur de torsion, qui a pour fonction d'empêcher que la partie de fil située au-delà du verrouilleur 3 par rapport à l'organe d'entraînement 2 soit tordue. On verra ci-après au moins une forme de réalisation de cet organe verrouilleur de torsion qui doit en outre pouvoir être déplacé le long du fil 1 dans le sens de l'éloignement par rapport à l'organe 2.

Le matériau constitutif du fil 1 sera choisi parmi les matières naturelles ou synthétiques plastiquement déformables. Il s'agira de manière préférée de matières plastiques telles que des polymères linéaires bien connus notamment dans l'industrie des matières plastiques (polyester, polyéthylène, polyamide, polyvinyle, poylpropylène... ). Il peut s'agir également de fibres naturelles d'origine animale ou végétale. Le fil peut se présenter sous forme de monofilament ou d'un amalgame fibreux.

Le principe d'un premier mode d'exécution du procédé de l'invention consiste à imprimer une torsion à la portion de fil comprise entre les organes 2 et 3 de manière qu'il se forme un premier nœud ou spire 4 (figure 2) suivi d'un second etc... le fil prenant alors une configuration hélicoïdale à spires jointives. Cette opération peut être réalisée à température ambiante ou avec apport de chaleur dans la zone du fil précédant immédiatement la formation des nœuds et refroidissement postérieur.

On a constaté qu'un nœud se forme lorsque la torsion a atteint un certain nombre de tours, fonction de la longueur de la partie de fil soumise à cette torsion. Plus cette longueur est grande, plus le nombre de tours est important et la formation du premier nœud est aléatoire en ce qui concerne sa position. On a donc intérêt, au départ, de rapprocher le plus possible l'organe verrouilleur de torsion 3 de l'organe d'entraînement pour circonscrire à une plage restreinte, l'endroit de formation du premier nœud. Il convient alors de reculer progressivement le long du fil l'organe 3 pour permettre la formation des nœuds successifs. Cette déformation étant consommatrice de fil, il convient de prévoir un déplacement de l'organe 3 par rapport au fil de vitesse supérieure à celle de la formation des nœuds. Par ailleurs, pour ne pas courir le risque d'une formation aléatoire de nœuds, il convient de maintenir entre l'organe 3 et le dernier nœud formé une distance a sensiblement constante dont la valeur dépendra des caractéristiques mécaniques et dimensionnelles du fil travaillé.

Pour illustrer les fonctions générales qui viennent d'être énoncées, on a représenté sur la figure 2 un capteur 5 de la position du dernier nœud formé, relié à un dispositif de commande 6 d'un organe d'entraînement 7 de l'organe verrouilleur 3 le long du fil 1 dans le sens de la flèche A.

On a voulu par là montrer que tout type d'asservissement entre la position du dernier nœud formé et celle de l'organe verrouilleur 3 est possible. On verra d'ailleurs ci-après d'autres moyens permettant de réaliser cet asservissement.

Sur la figure 3 on retrouve certains des éléments déjà décrits avec les mêmes références. Cette figure montre un exemple simple de réalisation d'un organe verrouilleur 3. Celui-ci est constité par un corps de révolution 8 (une poulie ou un diabolo) sur lequel le fil 1 forme au moins un tour mort. La friction du fil sur ce corps 8 constitue le blocage de la torsion. Cette poulie est montée folle en rotation sur un axe 8a auquel est attelé un étrier 9 comportant une partie 9a tournée en direction de l'organe d'entraînement. Cette partie 9a est constamment maintenue au contact du fil par son extrémité 10 et le dernier nœud formé 4 agit sur cette extrémité 10 en éloignant l'ensemble étrier-diabolo de l'organe 2. Ainsi, en ayant déterminé la longueur de la partie 9a susdite de manière adéquate, on garde une portion de fil 1, constante en longueur, entre le verrouilleur 8 et le dernier nœud formé.

On peut imaginer un diabolo 8 de diamètre et de longueur axiale telles qu'il soit seul suffisant pour accomplir la fonction ci-dessus décrite et soit lui-même repoussé le long du fil par le dernier nœud formé.

L'axe 8a que l'on appellera axe de conduite, puisqu'il coopère avec l'étrier 9 de poussée, peut également coopérer avec un ou plusieurs guides longitudinaux 11, 12 parallèles au fil 1. Cet axe peut être également attelé à un organe d'entraînement le long de ces guides (par exemple l'organe 7 de la figure 2).

On a ainsi réalisé un corps se présentant sous forme d'une succession de spires jointives. Lorsqu'on arrête l'opération de torsion, on constate que, à une détorsion résiduelle près de quelques tours, la configuration obtenue est stable et le corps constitue un ressort dont l'allongement peut être de 100% avant d'atteindre un point de transition au-delà duquel on détruit les spires.

Le procédé ci-dessus décrit peut comporter plusieurs phases complémentaires. On peut tout d'abord chauffer le fil 1 juste avant sa mise en torsion (four symbolisé en 13 sur la figure 3 qui serait par exemple mobile avec le dispositif verrouilleur) à une température qui, pour les matières synthétiques du type plastique, serait au-delà de la température de transition vitreuse du produit. On peut ensuite faire subir au produit fini un traitement thermique (chauffe et refroidissement contrôlés), soit pour fixer la détorsion résiduelle en y soumettant le produit maintenu en torsion, soit pour modifier les caractéristiques mécaniques et élastiques du produit en le soumettant à ce traitement après relâchement de la torsion résiduelle.

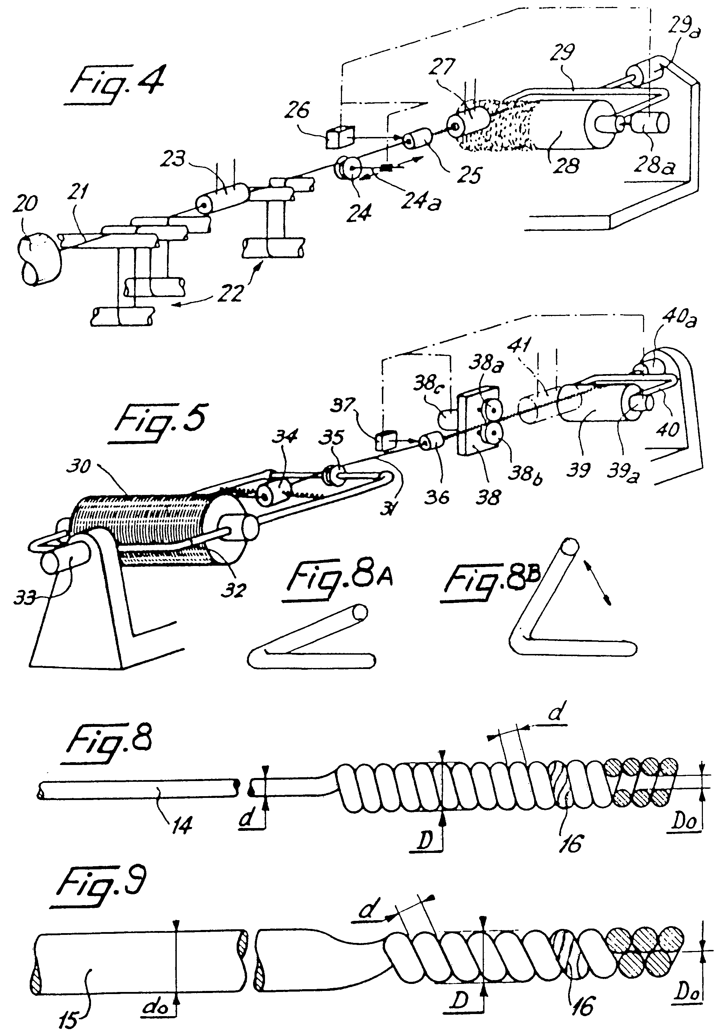

Le produit obtenu dépendra également, en ce qui concerne ses caractéristiques, de la nature du fil de base travaillé. La figure 8 montre un premier type de produit obtenu à partir d'un fil de base 14 qui est un monofilament en matière plastique étiré. On voit que l'élément hélicoïdal qui est obtenu possède un diamètre extérieur D de l'ordre de 2,8 fois le diamètre d du fil de base. Le diamètre intérieur de cet élément Do est de l'ordre de 0,8 fois le diamètre d susdit. Cette géométrie est obtenue par la mise en œuvre du procédé à température ambiante.

Sur la figure 9 on a représenté un second type de produit obtenu à partir d'un fil de base 15 monofilament non étiré, c'est-à-dire issu directement de l'extrudeuse qui le produit. La mise en œuvre du procédé sur un tel fil conduit au produit représenté sur cette figure 9 qui présente la particularité d'avoir un diamètre intérieur Do pratiquement nul. A titre indicatif on notera également que le diamètre extérieur est sensiblement égal à deux fois le diamètre du fil de base après mise en forme, c'est-à-dire de diamètre restreint à environ 0,4 fois le diamètre do du fil de départ (D étant égal à sensiblement 0,8 do).

Toutes les dimensions intermédiaires entre les deux exemples des figures 8 et 9 peuvent être obtenues selon le degré d'étirage du fil de base. De même les caractéristiques élastiques du produit sont fonction de ce degré d'étirage entre un allongement possible d'au moins 100% pour le produit de la figure 8 à un allongement de 10 à 20% pour le produit de la figure 9. On verra dans la suite que l'allongement maximal susdit peut encore être augmenté, au détriment de la raideur du ressort, ces deux critères variant généralement en sens inverse.

Ce produit présente en outre une caractéristique de structure, à savoir que les fibres formant la matière du fil de base, sont, dans conformation hélicoïdale, enroulées sur elles-mêmes comme représenté en 16 sur les figures 8 et 9. Cette caractéristique qui confère sa nervosité au produit, est parfois visible notamment lorsque le fil est translucide, et en tout état de cause facile à mettre en évidence par des moyens physiques et/ou chimiques d'analyse et de contrôle.

Ainsi, par exemple, si l'on isole une spire du produit de la figure 8 comme représenté sur la figure 8A, et que l'on soumet cette spire à un chauffage, celle-ci a tendance à s'ouvrir d'une part dans le sens d'une augmentation du diamètre de la spire et d'autre part dans un sens parallèle à l'axe de la spire comme le montre la figure 8B, après que les extrémités se sont croisées.

Enfin, on notera que le produit de la figure 8 présente toujours un diamètre (D) extérieur au plus égal à 2,8 fois le diamètre (d) du fil qui le constitue.

Il faut également noter que si l'on fait subir au produit issu d'un fil étiré selon la figure 8 un traitement thermique approprié avant détorsion résiduelle, on peut obtenir un produit aux caractéristiques semblables à celles du produit selon la figure 9 c'est-à-dire avec un diamètre intérieur voisin de zéro ou, selon la valeur des paramètres de ce traitement thermique, un diamètre intérieur compris entre 0 et ladite valeur d'environ 0,8d.

En revenant maintenant à la figure 4, on voit un schéma illustrant un dispositif pour mettre en œuvre le procédé décrit précédemment de manière continue. On a représenté en 20 la sortie d'une extrudeuse d'un fil monofilament 21. Ce dernier entre dans un jeu de rouleaux 22 d'étirage qui peut comporter un dispositif d'apport de chaleur 23. Le fil 21 passe ensuite sur un organe verrouilleur de torsion 24 qui peut être constitué comme précédemment par une poulie ou un diabolo dont l'axe de conduite 24a peut être déplacé le long du fil 21. Un détecteur de nœuds 25 est placé au niveau du dernier nœud formé et est associé à un dispositif de commande 26 d'une manière expliquée plus en détail en regard des figures 6 et 7. Le produit hélicoïdal passe ensuite dans un appareil de traitement thermique 27 (qui peut être un four électrique associé ou non à un disposition de refroidissement) pour finalement s'enrouler sur une bobine de stockage 28 dont la rotation autour de son axe est commandée par un moteur 28a tandis qu'elle est montée sur un étrier 29 lui-même commandé en rotation par le moteur 29a autour d'un axe perpendiculaire à l'axe de la bobine.

La mise en œuvre du procédé susdit au moyen du dispositif décrit en regard de la figure 4 s'opère de la manière suivante.

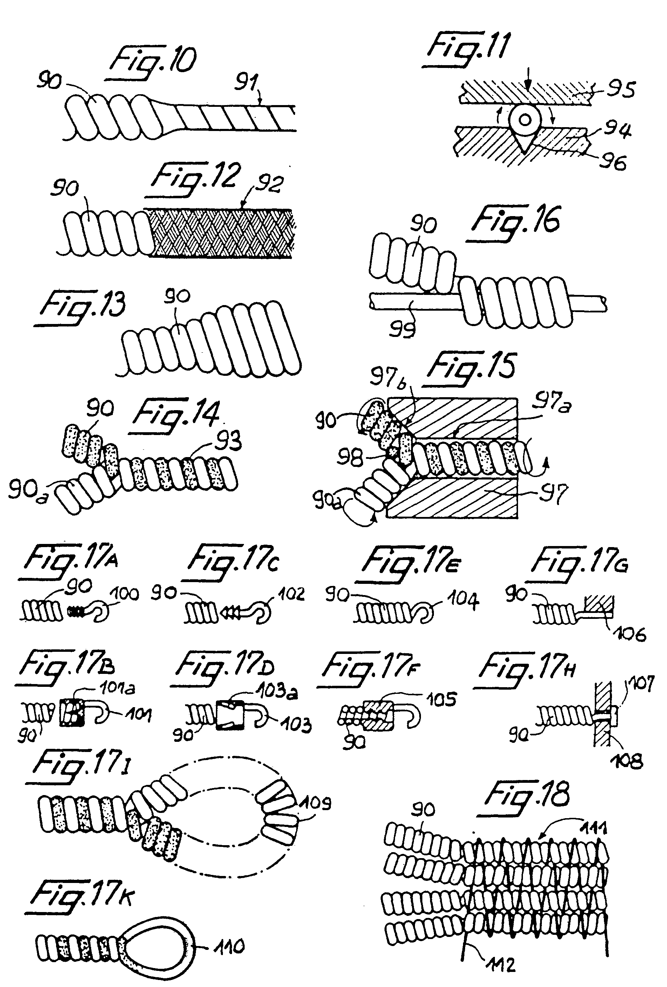

Le fil 21 est rendu, par l'une de ses extrémités, solidaire de la bobine 28 au travers des dispositifs 22 à 27. La bobine est d'une part entraînée en rotation sur elle-même au moyen du moteur 28a et d'autre part en rotation au moyen du moteur 29a. Cette dernière rotation a pour effet, comme l'organe d'entraînement 2 des figures 1 à 3, la création de nœuds sur la portion de fil comprise entre la bobine 28 et l'organe verrouilleur 24. La position du dernier nœud formé est détectée par l'organe 25 qui commande soit la vitesse du moteur 28a (par le moyen de son dispositif associé 26) soit le déplacement du verrouilleur 24 le long du fil 21 de manière que la distance a de la figure 2 soit maintenue. Ainsi s'enroule sur la bobine 28, le produit hélicoïdal selon l'invention. Pour notamment supprimer la détorsion résiduelle, on fera subir au fil hélicoïdal un traitement thermique par le dispositif de chauffage 27. Cette disposition sera surtout nécessaire si le fil de base est étiré. On notera que l'on peut faire varier les caractéristiques du produit final en agissant sur le degré d'étirage obtenu par le jeu de rouleaux 22 et le dispositif 23. Il sera avantageux, à cet égard de supprimer l'étirage, le fil 21 passant directement sur le diabolo 24 pour obtenir un produit final selon la figure 10.

Le dispositif représenté schématiquement à la figure 5 permet également de mettre en œuvre le premier mode d'exécution du procédé selon l'invention de manière continue.

Le fil 31 est alors issu d'une bobine 30 à dévider qui, pouvant tourner autour de son axe, est montée sur un étrier 32 lui-même animé d'un mouvement de rotation autour d'un axe perpendiculaire à l'axe de la bobine 30, par un moteur 33. L'étrier porte un dispositif 34 de freinage du fil dévidé et un organe 35 verrouilleur de torsion sur lequel le fil fait au moins un tour mort. Après être passé dans le détecteur 36 du dernier nœud formé associé à un dispositif de commande 37, le produit devenu hélicoïdal passe dans un organe 38 d'immobilisation de la torsion et d'entraînement vers l'aval de ce dernier. Ce dispositif pourra être constitué par deux galets 38a, 38b pinçant le produit et commandé en rotation par un moteur 38c. Enfin une bobine réceptrice 39 est montée à rotation autour de son axe sur un étrier 40 et est accouplée à un moteur d'entraînement 39a. L'étrier 40 tourne quant à lui autour d'un axe perpendiculaire à celui de la bobine 39 par le moyen d'un moteur 40a. De même que dans le cas précédent, on pourra prévoir un dispositif de traitement thermique 41 en amont de la bobine 39. Cependant il faut noter que la manœuvre en rotation de la bobine 39 par le monteur 40a et l'étrier 40, dans un sens inverse de celui de la bobine 30 et de l'étrier 32 permet de supprimer la détorsion résiduelle. Le dispositif de traitement thermique 41 n'aura plus alors qu'une fonction de modification des caractéristiques du produit obtenu. Le détecteur de nœuds 36 permet au moyen du dispositif associé 37 d'asservir en vitesse le moteur 38c et le moteur 39a en fonction de la distance à conserver entre le dernier nœud formé et l'organe de verrouillage 35.

La figure 6 est l'illustration d'un exemple de réalisation du détecteur de nœuds 36 ou 25. Il consiste essentiellement en un manchon 52 monté à coulissement sur les derniers nœuds formés et qui est relié à une partie fixe 53 du bâti de la machine au moyen d'une lame ressort 54 sur laquelle est disposée une jauge de contrainte 55. L'exploitation par un dispositif approprié des informations (et de leur variation) émises par la jauge de contrainte permet de créer un asservissement en boucle entre la position du détecteur et les divers organes moteurs à commander (24a, 28a, 38c, 39a) pour obtenir une stabilisation de la distance désirée.

On notera également sur cette figure que le manchon 52 peut comporter des éléments chauffants 56 et ainsi jouer le rôle du dispositif de traitement thermique 27 ou 41 des figures précédentes.

La figure 7 montre schématiquement deux variantes du détecteur de nœuds de la figure 6. Ces variantes sont pneumatiques, c'est-à-dire que le corps fixe 60 du détecteur comprend une chambre 61 dans laquelle les derniers nœuds formés sont logés. Par un conduit 62 on établit une pression dans la chambre qui est détectée par un conduit 63. Cette pression chutera si les nœuds sortent de la chambre 61 et cette chute de pression engendrera un signal qui sera exploité par le reste de l'installation pour rétablir la situation normale dans laquelle les nœuds sont logés dans la chambre 61. Dans une variante, la chambre 61 peut affecter la forme d'un conduit évasé (61'). Ainsi pour une pression nominale à l'entrée du conduit 62 la valeur détectée sera fonction de la position des nœuds dans la chambre 61 puisque celle-ci détermine la section de passage des fuites.

Sur la figure 10 on a représenté un produit hélicoïdal 90 issu du procédé selon l'invention dont on a lissé la surface extérieure 91 par tout moyen approprié. Ce moyen sera par exemple une rectification «centerless» ou un roulage à chaud.

La figure 11 illustre un appareillage simple pour obtenir ce lissage. Il consiste simplement en deux plaques 94 et 95 dont l'une 94 est pourvue d'une rainure 96 en V de guidage du produit et dont l'autre est chauffée et appliquée sous une certaine pression contre le produit placé dans la rainure. Une simple rotation sur lui-même du produit dans le sens du serrage des spires provoque son avancement entre les plaques, et le lissage de sa surface extérieure.

La figure 12 montre que l'on peut gainer le produit 90 au moyen d'une enveloppe tressée 92 comparable à celle utilisée dans les liens élastiques en élastomère. On peut également envelopper le produit 90 dans un film souple ou dans un matériau élastique surextrudé de manière connue.

La figure 13 montre que le produit 90 semblable par exemple à celui représenté sur la figure 8, peut subir une opération mécanique de dilatation de son diamètre. Cette opération pourra être réalisée soit par mandrinage (expansion forcée du produit sur un cône), soit par roulage entre deux galets intérieurs et un galet extérieur à chaud ou à température ambiante. Le ressort de plus grand diamètre ainsi obtenu présentera une raideur moins importante que le produit initial mais en revanche un pouvoir d'allongement supérieur.

La figure 14 montre que l'on peut obtenir un produit à double hélice 93 en associant deux produits tels que 90 et 90a de manière qu'une spire de l'un soit intercalée entre deux spires de l'autre. On obtient ainsi des produits dont l'élasticité n'intervient qu'au-delà d'un seuil d'effort donné.

Sur la figure 15 on a schématisé le dispositif qui permet de manière simple d'obtenir le produit de la figure 14. Ainsi les deux produits 90 et 90a sont introduits dans un guide 97 pourvu d'un orifice central 97a débouchant dans un cône d'entrée 97b traversé d'une goupille 98 dont la distance par rapport aux flancs du cône et au débouché de l'orifice 97a est fonction du diamètre du fil des produits 90 et 90a. Le «vissage» des produits l'un dans l'autre s'obtient en ayant introduit chacun d'eux d'un côté de la goupille 98 et en animant l'organe 97 d'une rotation relative par rapport aux produits autour de l'axe de l'orifice 97a.

La figure 16 illustre l'utilisation du produit de l'invention 90 en tant que gaine d'un élément 99 filiforme ou tubulaire qui est logé à l'intérieur du produit. On remarquera qu'il pourra être avantageux de gainer un produit dont le diamètre est supérieur au diamètre Do susdit afin d'obtenir un serrage de la gaine sur l'élément central. Cet avantage revêt toute son importance lorsqu'il s'agit de gainer partiellement un élément cylindrique sur une portion de sa longueur. Le serrage ainsi obtenu assure le maintien de la gaine sur la portion à protéger sans avoir recours à d'autres moyens de fixation. L'application de ce tronçon de gaine peut être réalisée au moyen d'un outillage possédant une tête tournant autour de l'élément à gainer et délivrant le produit de l'invention autour de ce dernier, ou entraînant en rotation le produit gainant et le vissant ainsi sur l'élément à gainer.

La figure 17A montre que l'on peut facilement rapporter sur un produit 90 un crochet 100 vissé dans le pas de l'hélice. La figure 17B montre un crochet 101 qui se rapporte par vissage extérieur sur l'extrémité du ressort 90. Pour éviter une désolidarisation intempestive du crochet, par diminution du diamètre extérieur sous l'effet d'une traction, il est prévu un picot central 101a qui maintient le produit 90 à son diamètre nominal.

Sur la figure 17C le crochet 102 est introduit à force et retenu par sa tige en forme de crampons dans le produit 90. Le crochet 103 de la figure 17D possède quant à lui des languettes 103a servant de crampons unidirectionnels permettant l'emmanchement et s'opposant à l'extraction. Le crochet 104 de la figure 17E est formé par le fil lui-même alors que celui 105 de la figure 17F est rapporté par surmoulage. L'extrémité du ressort 90 est soudée sur une plaque 106 (figure 17G) tandis que l'extrémité 107 du ressort 90 de la figure 17H est déformée à chaud pour former butée de retenue après être passée dans l'orifice d'une plaque 108. La figure 17I montre que l'on peut aisément constituer une boucle 109 en associant l'extrémité libre du produit 90 à une section de ce dernier comme dans le cas de la figure 14.

Sur la figure 17K enfin, la boucle 110 est formée par une section de fil non déformé hélicoïdalement situé entre deux sections déformées dont l'une sert, par association avec l'autre selon le schéma des figures 14 et 15, à refermer la boucle.

Ces figures 17 montrent qu''il est aisément possible de constituer un ressort attelable à deux organes quelconques avec le produit de l'invention, et que de ce fait les applications sont nombreuses dans tous les domaines où l'emploi de ressorts ou cordons élastiques est nécessaire.

La figure 18 enfin, illustre schématiquement l'application du produit de l'invention au domaine du tissage. On voit qu'il est aisé de constituer une bande élastique 111 dans laquelle les fils de chaînes sont constitués par des produits hélicoïdaux 90, placés côte à côte en ayant pris soin d'alterner au mieux les sens d'hélice de chaque produit afin d'éviter des déformations ultérieures.

**Revendications**

1. Procédé de fabrication d'un produit hélicoïdal à partir d'un fil (1) de base en matériau naturel ou synthétique monofilament ou fibreux, plastiquement déformable, selon lequel on déforme plastiquement le fil par une opération qui consiste à imprimer au fil (1), placé sous tension (T) déterminée, une torsion autour de son axe longitudinal entre deux points (1a, 1b) solidaires en torsion du fil (1) et mobiles en rotation l'un par rapport à l'autre autour de l'axe du fil (1), jusqu'à la formation de nœuds (4) successifs qui placent progressivement le fil (1) dans une configuration hélicoïdale à spires jointives, caractérisé en ce que l'on déplace l'un des points (1b) solidaires en torsion du fil par rapport à ce dernier au fur et à mesure de la formation dedits nœuds (4), en fonction de la position du dernier nœud formé.

2. Procédé selon la revendication 1, caractérisé en ce que le point (1b) déplaçable est fixe en rotation, l'autre point (1a) étant rotatif.

3. Procédé selon la revendication 1 caractérisé en ce que le point déplaçable (Ab) est le point rotatif, l'autre étant fixe.

4. Dispositif pour mettre en œuvre le procédé selon l'une quelconque des revendications 1 à 3 caractérisé en ce qu'il comporte un organe de mise en torsion du fil (1), un dispositif de tension (T), et un organe verrouilleur (3) déplaçable le long du fil en fonction de la position du dernier nœud formé, constitué par un organe de révolution (8) autour duquel le fil (1) forme au moins un tour mort.

5. Dispositif selon la revendication 4 caractérisé en ce que, pour mettre en œuvre le procédé susdit de façon continue, l'organe de mise en torsion susdit est constitué par une bobine d'enroulement (29) du produit, entraînée en rotation autour d'un axe sensiblement perpendiculaire à son axe d'enroulement.

6. Dispositif selon la revendication 4 caractérisé en ce que pour mettre en œuvre le procédé susdit de façon continue, l'organe verrouilleur de torsion (35) constitue l'organe de mise en torsion susdit et est monté sur un bâti (32) tournant autour de l'axe longitudinal du fil, ledit bâti étant porteur d'une bobine (30) de fil de base (31) en amont de l'organe verrouilleur tandis qu'en aval de ce dernier, ledit dispositif comporte un organe (38) d'immobilisation en torsion du produit, et d'entraînement longitudinal de ce dernier en direction d'une bobine d'enroulement (39).

7. Dispositif selon la revendication 6 caractérisé en ce que la bobine d'enroulement (39) susdite est montée à rotation autour d'un axe sensiblement parallèle à l'axe longitudinal du produit.

**Claims**

1. A process for the production of a helical product from a base wire (1) of natural or synthetic material in monofilament or fibrous form, which is plastically deformable, wherein the wire is plastically deformed by an operation which comprises imparting to the wire (1) which is put under a given tension (T) at twist about its longitudinal axis between two points (1a, 1b) which are fixed in respect of twisting with respect to the wire (1) and which are movable in respect of rotation relative to each other about the axis of the wire (1) until successive knots (4) are formed, which progressively put the wire (1) into a helical configuration with contiguous turns, characterised by displacing one of the points (1b) which are fixed in respect of twisting with respect to the wire relative to the wire as said knots (4) are formed, in dependence on the position of the last knot formed.

2. A process according to claim 1 characterised in that the displaceable point (1b) is fixed in respect of rotation, the other point (1a) being rotatable.

3. A process according to claim 1 characterised in that the displaceable point (Ab) is the rotatable point, the other being fixed.

4. Apparatus for carrying out the process according to any one of claims 1 to 3 characterised in that it comprises a member for twisting the wire (1), a tensioning means (T), and a locking member (3) which is displaceable along the wire in dependence on the position of the last knot formed, the locking member comprising a member (8) of revolution around which the wire (1) forms at least one dead turn.

5. Apparatus according to claim 4 characterised in that, to carry out said process in a continuous fashion, the said twisting member is formed by a winding reel (29) for the product, which is driven in rotation about an axis substantially perpendicular to its axis of winding.

6. Apparatus according to claim 4 characterised in that to carry out said process in a continuous fashion the twist locking member (35) forms said twisting member and is mounted on a frame (32) which rotates about the longitudinal axis of the wire, said frame being the carrier for a reel (30) of base wire (31) upstream of the locking member while downstream of the latter said apparatus comprises a member (38) for immobilising the product in respect of twisting and for longitudinal entrainment of said product in the direction of a winding reel (39).

7. Apparatus according to claim 6 characterised in that said winding reel (39) is mounted rotatably about an axis substantially parallel to the longitudinal axis of the product.

**Patentansprüche**

1. Verfahren zur Herstellung eines schraubenförmigen Erzeugnisses aus einem Basisdraht (1) aus natürlichem oder synthetischem, monofilem oder fasrigem Material, gemäss welchem man den Draht durch eine Operation plastisch verformt, die darin besteht, dem unter bestimmte Spannung (T) gesetzten Draht (1) eine Tordierung um seine Längsachse zwischen zwei Punkten (1a, 1b) zu erteilen, die bei Torsion des Drahtes (1) fest und zueinander um die Achse des Drahtes bis zur Bildung sukzessiver Knoten (4) drehbeweglich sind, die ihrerseits den Draht (1) nach und nach in eine schraubenförmige Konfiguration mit nebeneinander liegenden Windungen versetzen, dadurch gekennzeichnet, dass man einen der bei Torsion des Fadens festen Punkte (1b) mit Bezug auf den Faden entsprechend der Bildung der Knoten (4) in Abhängigkeit von der Lage des letzten gebildeten Knotens verschiebt.

2. Verfahren nach Anspruch 1, dadurch gekennzeichnet, dass der verschiebliche Punkt (1b) drehfest und der andere Punkt (1a) drehbar ist.

3. Verfahren nach Anspruch 1, dadurch gekennzeichnet, dass der verschiebliche Punkt (1b) der drehbare Punkt und der andere fest ist.

4. Vorrichtung zur Durchführung des Verfahrens nach einem der Ansprüche 1 bis 3, dadurch gekennzeichnet, dass sie ein Organ zur Tordierung des Drahtes (1), eine Spanneinrichtung (T) und ein Verriegelungsorgan (3) umfasst, das in Abhängigkeit von der Lage des letzten gebildeten Knotens entlang dem Draht verschieblich ist und von einem Drehorgan (8) gebildet ist, um welches der Draht wenigstens einmal herumgeschlagen ist.

5. Vorrichtung nach Anspruch 4, dadurch gekennzeichnet, dass zur Durchführung des Verfahrens in kontinuierlicher Weise das Organ zur Tordierung des Drahtes von einer Aufwickelspule (29) für das Erzeugnis gebildet ist, die drehend um eine Achse angetrieben wird, welche im wesentlichen senkrecht zu ihrer Aufwickelachse verläuft.

6. Vorrichtung nach Anspruch 4, dadurch gekennzeichnet, dass zur Durchführung des Verfahrens in kontinuierlicher Weise das Torsions-Verriegelungsorgan (35) das Organ zur Tordierung des Drahtes bildet und auf einem sich um die Längsachse des Drahtes drehenden Rahmen (32) befestigt ist, wobei der Rahmen Träger einer vor dem Verriegelungsorgan angeordneten Spule (30) für den Basisdraht (31) ist, während die Vorrichtung hinter dem Verriegelungsorgan ein Organ (38) zur Torsionsfixierung des Erzeugnisses und zur längsweisen Mitnahme des letzteren in Richtung auf eine Aufwickelspule (39) aufweist.

7. Vorrichtung nach Anspruch 6, dadurch gekennzeichnet, dass die Aufwickelspule (39) um eine Achse drehbar gelagert ist, die im wesentlichen parallel zur Längsachse des Erzeugnisses ist.

0 122 828

Fig.1

Fig.2

Fig.3

Fig.6

Fig.7

9

*Fig.4*

*Fig.5*

*Fig.8*A *Fig.8*B

*Fig.8*

*Fig.9*

0 122 828

Fig.10

Fig.11

Fig.12

Fig.16

Fig.13

Fig.15

Fig.14

Fig.17A  Fig.17C  Fig.17E  Fig.17G

Fig.17B  Fig.17D  Fig.17F  Fig.17H

Fig.17I

Fig.18

Fig.17K

13